# EUROPÄISCHE PATENTSCHRIFT

(11) **EP 3 088 758 B1**
(45) Veröffentlichungstag und Bekanntmachung des Hinweises auf die Patenterteilung: **13.09.2017**
(21) Anmeldenummer: 15165949.7
(22) Anmeldetag: 30.04.2015
(51) Int. Cl.: F16D 3/68

(54) **DRUCKKÖRPERANORDNUNG FÜR EINE KLAUENKUPPLUNG**
PRESSURE BODY ASSEMBLY FOR A CLAW COUPLING
SYSTÈME DE PRESSION POUR EMBRAYAGE À GRIFFES

(43) Veröffentlichungstag der Anmeldung: 02.11.2016
(73) Patentinhaber: Siemens Aktiengesellschaft, 80333 München (DE)
(72) Erfinder: Kleinewegen, Stefan, 46395 Bocholt (DE)

(56) Entgegenhaltungen:
- DE-A1- 19 707 584
- DE-U1- 29 622 017
- DE-U1- 29 806 632
- US-A- 2 706 897
- US-A- 5 908 355

## Beschreibung

Die vorliegende Erfindung betrifft eine Druckkörperanordnung für einen Klauenkupplung, umfassend einen aus elastischem Material hergestellten Druckkörperring, der ein Ringelement sowie radial auswärts von dem Ringelement vorstehende Druckkörper aufweist. Ferner betrifft die vorliegende Erfindung eine Klauenkupplung umfassend zwei axial einander gegenüber angeordnete Kupplungselemente und eine solche Druckkörperanordnung, wobei die beiden Kupplungselemente einander zugewandte Stirnflächen aufweisen, von denen jeweils wechselweise ineinandergreifende Klauen vorstehen, die auf einander entsprechenden Kreisringen angeordnet sind, und wobei jeweils benachbart angeordnete Klauen zwischen sich einen sich axial erstreckenden Aufnahmeraum definieren, der von einander zugewandten Seitenflächen der Klauen begrenzt ist und jeweils einen der Druckkörper aufnimmt.

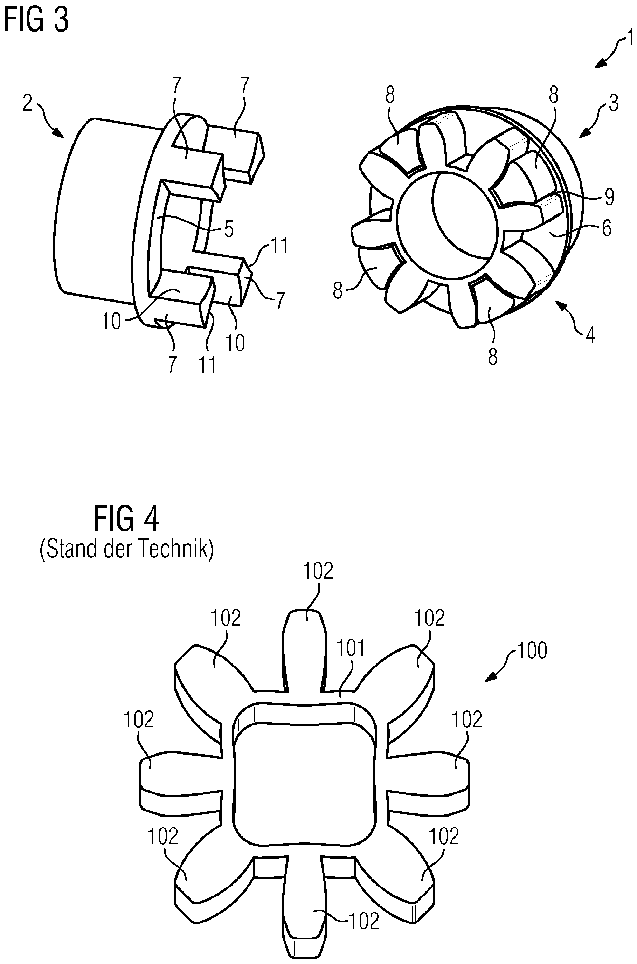

Druckkörperanordnungen sowie Klauenkupplungen der eingangs genannten Art sind im Stand der Technik in unterschiedlichsten Ausgestaltungen bekannt. Sie dienen dazu, ein Drehmoment zwischen zwei miteinander fluchtenden Wellen zu übertragen, wie beispielsweise zwischen einer Motorwelle und einer Getriebewelle. Während des Betriebes verdrehen sich die beiden Kupplungselemente relativ zueinander entsprechend dem anliegenden Drehmoment und der Steifigkeit des elastischen Materials des Druckkörperringes. Dabei vollzieht auch jede Klaue der Kupplungselemente eine Drehbewegung, wobei sich ein radial weiter außen angeordneter Punkt einer Seitenfläche einer Klaue auf einer größeren Kreisbahn als ein weiter innenliegender Punkt auf der Seitenfläche der Klaue bewegt und damit einen größeren Weg zurücklegt. Dies führt dazu, dass jeder Druckkörper des Druckkörperringes außen mehr zusammengepresst wird als innen, was eine ungleichförmige Pressungsverteilung nach sich zieht, bei der radial außen eine höhere Kantenpressung wirkt. Entsprechend werden die Druckkörper während des Betriebes der Klauenkupplung radial einwärts gedrückt, was häufig eine erheblicher Verformung der Druckkörperanordnung nach sich zieht. Figur 4 zeigt beispielhaft einen verformten Druckkörperring 100 nach dessen Demontage. Der Druckkörperring 100 ist aus einem elastischen Material hergestellt und besteht aus einen Ringelement 101 sowie aus vorliegend 8 radial auswärts von dem Ringelement 101 vorstehenden Druckkörpern 102, wobei das ursprünglich kreisförmige Ringelement 101 stark verformt ist.

Um derartige Verformungen einer Druckkörperanordnung zu verhindern, ist es bekannt, das maximal zulässige Drehmoment einer Klauenkupplung zu begrenzen. Auf diese Weise kann verhindert werden, dass unzulässig hohe radial einwärts gerichtete Kräfte auf die Druckkörper wirken, wodurch einer Verformung der Druckkörperanordnung, wie sie in Figur 4 gezeigt ist, effektiv entgegengewirkt werden kann. Das maximal zulässige Drehmoment ist hier allerdings meist sehr niedrig anzusetzen, was in vielen Fällen nicht wünschenswert ist. Ein weiterer Ansatz besteht darin, das in Figur 4 dargestellte Ringelement 101 durch eine Kreisscheibe zu ersetzen, um der Druckkörperanordnung eine höhere Steifigkeit zu verleihen. Bei einer derartigen Ausgestaltung einer Druckkörperanordnung kann dann eine Welle jedoch nicht mehr in die Kupplung ragen, was eine konstruktive Einschränkung ist. Das Gebrauchsmuster DE 296 22 017 offenbart eine Druckkörperanordnung für eine Klauenkupplung gemäß dem Oberbegriff von Anspruch 1. Ausgehend von diesem Stand der Technik ist es eine Aufgabe der vorliegenden Erfindung, eine Druckkörperanordnung der eingangs genannten Art mit alternativem Aufbau sowie einer Klauenkupplung mit einer solchen alternativen Druckkörperanordnung zu schaffen.

Zur Lösung dieser Aufgabe schafft die vorliegende Erfindung eine Druckkörperanordnung der eingangs genannten Art, die dadurch gekennzeichnet ist, dass am Innenumfang des Ringelementes eine umlaufende nutförmige Aussparung vorgesehen ist, in die ein Verstärkungsring zerstörungsfrei lösbar eingesetzt ist, wobei der Verstärkungsring aus einem Material hergestellt ist, das eine höhere Festigkeit als das elastische Material des Druckkörperringes aufweist. Dank eines solchen Verstärkungsringes wird einer Deformierung des Ringelementes in radialer Einwärtsrichtung effektiv entgegengewirkt, was dazu führt, dass Klauenkupplungen, die mit einer erfindungsgemäßen Druckkörperanordnung ausgestattet sind, hohe Drehmomente übertragen können, ohne dass es zu einem frühzeitigen Verschleiß der Druckkörperanordnung kommt. Darüber hinaus weist die erfindungsgemäße Druckkörperanordnung trotz des zusätzlichen Verstärkungsringes einen einfachen Aufbau auf, der sich problemlos herstellen und montieren lässt. Zudem kann der Verstärkungsring im Bedarfsfall schnell und einfach demontiert sowie ausgetauscht werden.

Gemäß einer Ausgestaltung der vorliegenden Erfindung ist der Verstärkungsring aus Metall hergestellt, das aufgrund seiner hohen Festigkeit bevorzugt wird.

Vorteilhaft ist der Verstärkungsring mit einem durchgehenden radialen Schlitz versehen, wodurch die Montage und Demontage des Verstärkungsringes erleichtert werden.

Bevorzugt entsprechen die Breite der Aussparung und die Breite des Verstärkungsringes im Wesentlichen einander, so dass der Verstärkungsring in axialer Richtung formschlüssig in der Aussparung gehalten ist. Auf diese Weise wird eine exakte und reproduzierbare Positionierung des Verstärkungsringes an dem Ringelement des Druckkörperringes erzielt.

Zur Lösung der eingangs genannten Aufgabe schafft die vorliegende Erfindung ferner eine Klauenkupplung umfassend zwei axial einander gegenüber angeordnete Kupplungselemente und eine zwischen diesen angeordnete erfindungsgemäße Druckkörperanordnung, wobei die beiden Kupplungselemente einander zugewandte Stirnflächen aufweisen, von denen jeweils wechselweise ineinander greifende Klauen vorstehen, die aufeinander entsprechenden Kreisringen angeordnet sind, und wobei jeweils benachbart angeordnete Klauen zwischen sich einen sich axial erstreckenden Aufnahmeraum definieren, der von einander zugewandten Seitenflächen der Klauen begrenzt ist und jeweils einen der Druckkörper aufnimmt.

Weitere Merkmale und Vorteile der vorliegenden Erfindung werden anhand der nachfolgenden Beschreibung einer Klauenkupplung gemäß einer Ausführungsform der vorliegenden Erfindung unter Bezugnahme auf die beiliegende Zeichnung deutlich. Darin ist
- Figur 1: eine perspektivische Ansicht einer Druckkörperanordnung gemäß einer Ausführungsform der vorliegenden Erfindung im demontierten Zustand;
- Figur 2: eine Schnittansicht der montierten Druckkörperanordnung entlang der Linie II-II in Figur 1;
- Figur 3: eine perspektivische Ansicht einer Klauenkupplung mit einer in den Figuren 1 und 2 dargestellten Druckkörperanordnung und
- Figur 4: eine perspektivische Ansicht eines verformten Druckkörperringes gemäß dem Stand der Technik nach dessen Demontage.

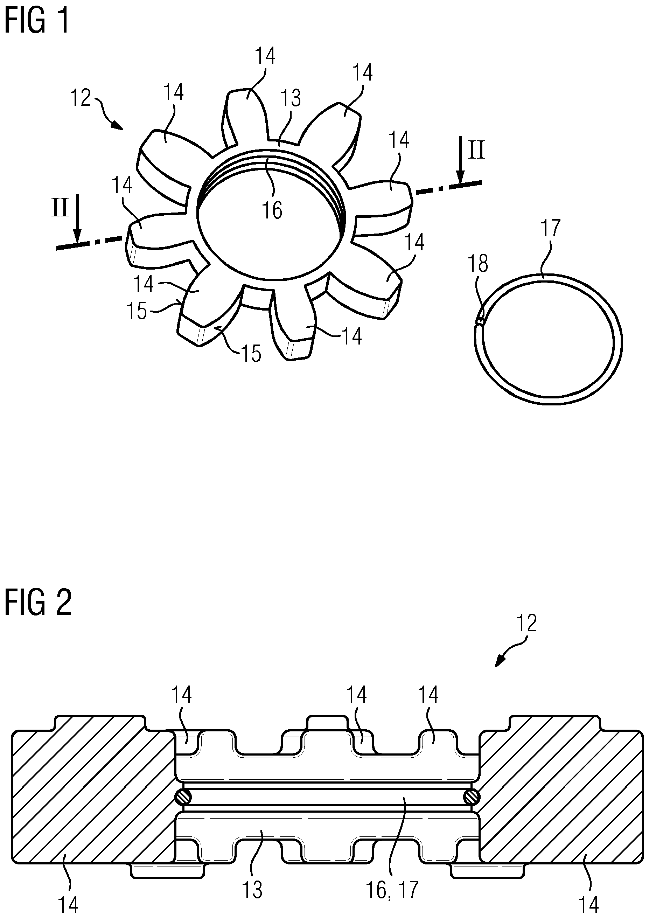

Die Figuren 1 bis 3 zeigen eine Klauenkupplung 1 gemäß einer Ausführungsform der vorliegenden Erfindung bzw. Komponenten derselben. Die Klauenkupplung 1 dient dazu, ein Drehmoment zwischen zwei miteinander fluchtenden Wellen zu übertragen und umfasst als Hauptkomponenten zwei im bestimmungsgemäß montierten Zustand axial einander gegenüber angeordnete Kupplungselemente 2, 3 mit fluchtenden Längsachsen A1, A2 sowie eine zwischen diesen angeordnete Druckkörperanordnung 4.

Die beiden Kupplungselemente 2 und 3 weisen einander zugewandte Stirnflächen 5 und 6 auf, von denen wechselweise ineinandergreifende Klauen 7 und 8 vorstehen, die jeweils auf einander entsprechenden Kreisringen angeordnet sind. Dabei definieren jeweils benachbart angeordnete Klauen 7 und 8 der Kupplungselemente 2 und 3 zwischen sich einen sich axial erstreckenden Aufnahmeraum 9, der von einander zugewandten, konkav gewölbten Seitenflächen 10 und 11 der Klauen 7 und 8 der Kupplungselemente 2 und 3 begrenzt ist. Die Kupplungselemente 2 und 3 sind vorliegend identisch ausgebildet. Alternativ ist es natürlich auch möglich, die Kupplungselemente 2 und 3 sowie deren Klauen 7 und 8 verschieden auszubilden, wenn dies zweckdienlich ist.

Die Druckkörperanordnung 4 umfasst einen aus elastischem Material hergestellten Druckkörperring 12, der ein Ringelement 13 sowie acht radial auswärts von dem Ringelement 13 vorstehende Druckkörper 14 aufweist, wobei das Ringelement 13 und die Druckkörper 14 vorliegend einteilig ausgebildet sind. Die Druckkörper 14 umfassend Flächen 15, die konvex gewölbt sind. Am Innenumfang des Ringelementes 13 ist eine umlaufende nutförmige Aussparung 16 vorgesehen, in die ein Verstärkungsring 17 zerstörungsfrei lösbar eingesetzt ist, wobei die Breite der Aussparung 16 und die Breite des Verstärkungsrings 17 im Wesentlichen einander entsprechen, so dass der Verstärkungsring 17 in axialer Richtung formschlüssig in der Aussparung 16 aufgenommen ist. Der Verstärkungsring 17 ist mit einem durchgehenden radialen Schlitz 18 versehen und aus einem Material hergestellt, das eine höhere Festigkeit als das elastische Material des Druckkörperringes 12 aufweist, vorliegend aus Metall. Es sollte allerdings klar sein, dass neben Metall auch andere Materialien für den Verstärkungsring 17 verwendet werden können, auch wenn Metall aufgrund seiner hohen Festigkeit bevorzugt wird.

Im montierten Zustand der Klauenkupplung 1 ist die Druckkörperanordnung 4 zwischen den beiden Kupplungselementen 2 und 3 derart eingesetzt, dass die einzelnen Druckkörper 14 des Druckkörperringes 12 in den jeweiligen Aufnahmeräumen 9 aufgenommen sind, die jeweils zwischen den einander zugewandten Seitenflächen 10 und 11 der Klauen 7 und 8 definiert sind. Dabei liegen die konkav gewölbten Flächen der Klauen 7 und 8 im Wesentlichen an den konkav gewölbten Flächen der Druckkörper 14 an.

Ein wesentlicher Vorteil der Klauenkupplung 1 besteht darin, dass der Verstärkungsring 17, der in die nutförmige Aussparung 16 des Ringelementes 13 eingelegt ist, eine Verformung des Ringelementes 13 in radialer Einwärtsrichtung entgegenwirkt. Dies führt dazu, dass mit der Klauenkupplung 1 verhältnismäßig hohe Drehmomente übertragen werden können, ohne dass damit eine ungewünschte Verformung des Druckkörperringes 12 einhergeht, wie sie in Figur 4 gezeigt ist. Darüber hinaus lässt sich der Verstärkungsringe 17 dank seiner geschlitzten Ausführung und seiner Anordnung innerhalb der Aussparung 16 am Ringelement 13 in einfacher Weise montieren und demontieren, weshalb auch ein Austausch des Verstärkungsringes 17 im Verschleissfall problemlos möglich ist.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Druckkörperanordnung (4) für eine Klauenkupplung (1), umfassend einen aus elastischem Material hergestellten Druckkörperring (12), der ein Ringelement (13) sowie radial auswärts von dem Ringelement (13) vorstehende Druckkörper (14) aufweist, **dadurch gekennzeichnet, dass** am Innenumfang des Ringelements (13) eine umlaufende nutförmige Aussparung (16) vorgesehen ist, in die ein Verstärkungsring (17) zerstörungsfrei lösbar eingesetzt ist, wobei der Verstärkungsring (17) aus einem Material hergestellt ist, das eine höhere Festigkeit als das elastische Material des Druckkörperringes (12) aufweist.

2. Druckkörperanordnung (4) nach Anspruch 1, **dadurch gekennzeichnet, dass** der Verstärkungsring (17) aus Metall hergestellt ist.

3. Druckkörperanordnung (4) nach Anspruch 1 oder 2, **dadurch gekennzeichnet, dass** der Verstärkungsring (17) mit einem durchgehenden radialen Schlitz (18) versehen ist.

4. Druckkörperanordnung (4) nach einem der vorhergehenden Ansprüche, **dadurch gekennzeichnet, dass** die Breite der Aussparung (16) und die Breite des Verstärkungsrings (17) im Wesentlichen einander entsprechen.

5. Klauenkupplung umfassend zwei axial einander gegenüber angeordnete Kupplungselemente (2, 3) und eine zwischen diesen angeordnete Druckkörperanordnung (4) nach einem der vorhergehenden Ansprüche, wobei die beiden Kupplungselemente (2, 3) einander zugewandte Stirnflächen (5, 6) aufweisen, von denen jeweils wechselweise ineinandergreifende Klauen (7, 8) vorstehen, die aufeinander entsprechenden Kreisringen angeordnet sind, und wobei jeweils benachbart angeordnete Klauen (7, 8) zwischen sich einen sich axial erstreckenden Aufnahmeraum (9) definieren, der von einander zugewandten Seitenflächen (10, 11) der Klauen (7, 8) begrenzt ist und jeweils einen der Druckkörper (14) aufnimmt.

## Claims

1. Pressure body arrangement (4) for a claw coupling (1), comprising a pressure body ring (12) made of an elastic material, having a ring element (13) as well a pressure bodies (14) projecting radially outwards from the ring element (13), **characterised in that** a circumferential slot-shaped cutout (16) is provided on the inner circumference of the ring element (13), into which a strengthening ring (17) is inserted so as to be able to be released non-destructively, wherein the strengthening ring (17) is made from a material that has a greater strength than the elastic material of the pressure body ring (12).

2. Pressure body arrangement (4) according to claim 1, **characterised in that** the strengthening ring (17) is made of metal.

3. Pressure body arrangement (4) according to claim 1 or 2, **characterised in that** the strengthening ring (17) is provided with a continuous radial slot (18).

4. Pressure body arrangement (4) according to one of the preceding claims, **characterised in that** the width of the cutout (16) and the width of the strengthening ring (17) essentially correspond to one another.

5. Claw coupling comprising two coupling elements (2, 3) disposed axially opposite one another and a pressure body arrangement (4) disposed between said elements according to one of the preceding claims, wherein the two coupling elements (2, 3) have end face surfaces (5, 6) facing towards one another, from which claws (7, 8) engaging alternately into one another project, which are disposed on circular rings corresponding to one another, and wherein claws (7, 8) disposed adjacent to one another in each case define an axially extending receiving area (9) between them, which is delimited by side surfaces (10, 11) of the claws (7, 8) facing towards one another each of which receives a pressure body (14).

## Revendications

1. Agencement (4) de corps de pression pour un embrayage (1) à crabots, comprenant un anneau (12) de corps de pression en un matériau élastique, qui a un élément (13) annulaire ainsi que des corps (14) de pression en saillie radialement vers l'extérieur de l'élément (13) annulaire, **caractérisé en ce que**, sur le pourtour intérieur de l'élément (13) annulaire, est prévu un évidement (16) faisant le tour en forme de rainure et dans lequel est inséré une bague (17) de renfort en un matériau qui a une rigidité plus grande que le matériau élastique de l'anneau (12) de corps de pression.

2. Agencement (4) de corps de pression suivant la revendication 1, **caractérisé en ce que** la bague (17) de renfort est en métal.

3. Agencement (4) de corps de pression suivant la revendication 1 ou 2, **caractérisé en ce que** la bague (17) de renfort est pourvue d'une fente (18) radiale traversante.

4. Agencement (4) de corps de pression suivant l'une des revendications précédentes, **caractérisé en ce que** la largeur de l'évidement (16) et la largeur de la bague (17) de renfort se correspondent sensiblement.

5. Embrayage à crabot comprenant deux élément (2, 3) d'embrayage disposés en face l'un de l'autre axialement et un agencement (4) de corps de pression suivant l'une des revendications précédentes disposé entre eux, les deux éléments (2, 3) d'embrayage ayant des surfaces (5, 6) frontales tournées l'une vers l'autre, dont font saillie des crabots (7, 8) s'interpénétrant en alternance, qui sont disposés sur des anneaux de cercle se correspondant et dans lequel des crabots (7, 8) voisins définissent entre eux un espace (9) de réception qui s'étend axialement, qui est délimité par des surfaces (10, 11) tournées l'une vers l'autre des crabots (7, 8) et qui reçoit respectivement l'un des corps (14) de pression.
